# DEMANDE DE BREVET EUROPEEN

(11) **EP 3 279 171 A1**
(43) Date de publication de la demande: **07.02.2018**
(21) Numéro de dépôt: 17183740.4
(22) Date de dépôt: 28.07.2017
(51) Int. Cl.: C04B 24/34, C04B 40/00

(54) **PRODUIT LIQUIDE DESTINÉ À AMÉLIORER L'ADHÉRENCE, SUR UN SUPPORT, DE MORTIERS ET DE COLLES À BASE DE LIANT HYDRAULIQUE**

(30) Priorité: 01.08.2016 FR 1657469
(71) Demandeur: Guard Industrie, 75008 Paris (FR); Sealock SARL, 62430 Sallaumines (FR)
(72) Inventeur: WAYSER, Barnabé-Igor, 75008 Paris (FR); BARKI, Jean-Marc, 75015 PARIS (FR)
(74) Mandataire: Jacobacci Coralis Harle

(57) **Abrégé**

L'invention concerne un produit liquide destiné à améliorer l'adhérence, sur un support, de mortiers et de colles à base de liant hydraulique. Selon l'invention, ledit produit est à base de colophane.

## Description

La présente invention concerne un produit liquide destiné à améliorer l'adhérence de mortiers et de colles à base de liant hydraulique sur toutes sortes de supports, même lisses, tels que béton, produits à base de ciment (carreaux, dalles, chapes, tuiles...), pierres naturelles et reconstituées, terres cuites (briques, tuiles, carreaux...), métaux, verre, céramique, etc...

On connaît déjà des produits de ce genre, généralement appelés « résines d'accrochage », se présentant sous la forme d'une dispersion aqueuse d'une résine synthétique de type styrène-butadiène ou styrène-acrylate, destinée à être ajoutée à un mortier à base de liant hydraulique (ciment, plâtre, chaux, ...).

De tels produits connus améliorent fortement l'adhérence du mortier sur n'importe quel support, tout en rendant ce mortier plus étanche et en augmentant la résistance de celui-ci à la traction, à la fissuration, à la flexion et à l'abrasion.

Toutefois, ces produits connus, à base de résine synthétique, sont issus du pétrole dont les ressources sont limitées et ils compromettent le développement durable de notre planète. En outre, ils présentent l'inconvénient de décanter de façon importante, aussi bien pendant l'application sur un support, lorsqu'ils se trouvent dans leur pot de stockage (ce qui nécessite un fréquent malaxage) qu'après application sur un support, lorsque celui-ci est humide.

De plus, ces produits sèchent rapidement une fois appliqués sur un support, ce qui peut compromettre l'adhérence de couches superposées suivantes.

Par ailleurs, pour éviter d'utiliser une résine synthétique, on a pensé à remplacer celle-ci par du latex naturel d'hévéa. Toutefois, les résines d'accrochage à base de latex naturel ne montrent pas, à l'usage, des caractéristiques d'adhérence, de séchage et de décantation satisfaisantes. De plus, le latex naturel d'hévéa étant commercialement disponible sous forme d'une dispersion stabilisée par de l'ammoniaque, il en résulte que les résines d'accrochage à base de latex naturel émettent une odeur désagréable d'ammoniaque.

La présente invention a pour objet de remédier à tous ces inconvénients.

A cette fin, selon l'invention, le produit est liquide et est destiné à améliorer l'adhérence sur un support, de mortiers ou de colles à base de liant hydraulique, ce produit liquide se présentant sous la forme d'une dispersion aqueuse d'une résine est remarquable en ce que ladite résine est à base de colophane et en ce que ladite dispersion aqueuse présente une viscosité Brookfield, à 20°C et à 20 RPM, au plus égale à 150 mPa.s.

La viscosité a été mesurée avec un viscosimètre rotatif BROOKFIELD, modèle RV-DV I+. Pour la mesure, 500g du produit a été mis à la température de 20°C pendant 2h puis la mesure a été réalisée sous un gradient de 20 RPM et à l'aide du mobile n°1. La valeur obtenue a été relevée après stabilisation de la mesure.

En effet, la demanderesse a trouvé qu'en remplaçant la résine synthétique par de la colophane, le produit d'amélioration d'adhérence devenait moins sensible à la décantation et séchait moins rapidement.

De plus, le produit d'amélioration d'adhérence conforme à l'invention présente l'avantage d'utiliser une matière première renouvelable (la colophane est issue de la résine naturelle qu'est la térébenthine) et non pas de dérivés du pétrole, tels que le styrène-butadiène ou le styrène-acrylate.

De préférence, dans la résine du produit d'amélioration d'adhérence conforme à l'invention, la colophane est présente sous la forme d'ester de colophane.

Une telle résine à base d'ester de colophane est commercialement disponible, par exemple sous la marque AQUATAC XR-4343 de la société Arizona Chemical B.V., Transistorstraat 16, 1322 CE Almere, Pays-Bas ou sous la marque DERMULSENE de la société DRT (LES DERIVES RESINIQUES ET TERPENIQUES).

Afin d'augmenter la flexibilité de la résine à base de colophane, la dispersion aqueuse conforme à l'invention peut comporter un plastifiant. De préférence, le plastifiant est un ester de dibenzoate glycol, comme celui connu commercialement sous la marque K-FLEX de la société Emerald Kalama Chemical, 1296 Third Street N-W, Kalama WA98625 ou sous la marque BENZOFLEX, en particulier le BENZOFLEX 2088, de la société EASTMAN (EASTMAN SPECIALTIES HOLDINGS CORPORATION).

De préférence, la dispersion aqueuse conforme à la présente invention présente un pH alcalin compris entre 8 et 10 et, en masse, un extrait sec compris entre 35% et 55%.

Pour obtenir le produit d'amélioration d'adhérence conforme à l'invention, on commence par homogénéiser la résine à base de colophane, puis on procède à la dilution de ladite résine avec de l'eau jusqu'à obtenir une dispersion aqueuse dont la viscosité Brookfield, à 20°C et à 20 RPM, est au plus égale à 150 mPa.s.

Dans le cas où le produit d'amélioration d'adhérence conforme à l'invention comporte un plastifiant, celui-ci est homogénéisé, puis incorporé, progressivement et lentement, à la résine à base de colophane homogénéisée, après quoi on procède à la dilution du mélange de la résine et du plastifiant avec de l'eau jusqu'à ce que la viscosité de la dispersion atteigne la valeur ci-dessus. L'incorporation progressive et lente s'effectue sous une agitation lente comprise entre 350 et 450 RPM.

Au produit liquide d'amélioration d'adhérence ainsi obtenu par la mise en oeuvre de la présente invention, on peut ajouter, afin d'améliorer certaines caractéristiques du produit, notamment après séchage :
- des fibres naturelles, telles que des fibres de chanvre, de lin, de cellulose, de coton..., ou des fibres synthétiques telles que des fibres de carbone, de verre, de polypropylène... ;
- des charges, par exemple de type fumées de silice ou cendres volantes ou encore des charges minérales de type calcium (poudre de marbre) ou argile ;
- des pigments minéraux ou organiques ;
- différents adjuvants, de préférence biosourcés, tels que tensioactifs, agents mouillants, agents antimousse, biocides, antioxydants, etc.

Le produit d'amélioration d'adhérence conforme à l'invention peut être utilisé pour réaliser, à partir d'un liant sec, un mortier à adhérence améliorée.

Ce mortier peut être une simple barbotine, destinée à former une couche d'accrochage pour une couche de mortier ultérieure, ou bien un mortier durable flexible, étanche et adhérant.

De préférence, pour obtenir un tel mortier à adhérence améliorée, on ajoute au liant sec une masse dudit produit d'amélioration d'adhérence comprise entre 1/15 et 1/20 de la masse dudit liant sec, ainsi qu'une masse d'eau environ double de celle dudit produit d'amélioration d'adhérence.

Entre autres applications, le produit d'amélioration d'adhérence conforme à l'invention peut être utilisé pour obtenir :
- des barbotines pour l'accrochage des enduits et des chapes de ciment,
- des chapes de ciment de haute résistance à l'usure artificielle et à l'érosion naturelle,
- des enduits d'imperméabilisation et d'étanchéité pour des réservoirs d'eau,
- des joints étanches et durables pour éléments préfabriqués ou coulés en place,
- des mortiers de collage pour éléments minéraux (pierres, briques, blocs, dalles de béton, carrelages, ...),
- des mortiers de réparation de bétons horizontaux ou verticaux, armés ou non et précontraints,
- des mortiers de raccord ou de collage de tuiles faîtières ou de solins,
- des collages par barbotine conformément à la norme DTU25-1, etc.

## Revendications

1. Produit liquide destiné à améliorer l'adhérence sur un support, de mortiers ou de colles à base de liant hydraulique, ce produit liquide se présentant sous la forme d'une dispersion aqueuse d'une résine,
**caractérisé en ce que** ladite résine est à base de colophane et **en ce que** ladite dispersion aqueuse présente une viscosité Brookfield, à 20°C et à 20 RPM, au plus égale à 150 mPa.s.

2. Produit liquide selon la revendication 1,
**caractérisé en ce que** ladite résine est à base d'ester de colophane.

3. Produit liquide selon l'une des revendications 1 ou 2,
**caractérisé en ce que** ladite dispersion aqueuse comporte un plastifiant.

4. Produit liquide selon l'une des revendications 1 à 3,
**caractérisé en ce que** ladite dispersion aqueuse présente un pH alcalin compris entre 8 et 10.

5. Produit liquide selon l'une des revendications 1 à 4,
**caractérisé en ce que** ladite dispersion aqueuse présente un extrait sec compris entre 35% et 55% en masse.

6. Procédé pour l'obtention d'un produit liquide selon l'une des revendications 1, 2, 4,5,
**caractérisé en ce que**, après homogénéisation de la résine à base de colophane, on procède à la dilution de ladite résine dans de l'eau jusqu'à obtenir une dispersion aqueuse dont la viscosité Brookfield, à 20°C et à 20 RPM, est au plus égale à 150 mPa.s.

7. Procédé selon la revendication 6 pour l'obtention du produit liquide selon la revendication 3,
**caractérisé en ce que**, après son homogénéisation, ledit plastifiant est incorporé, progressivement et lentement, à la résine à base de colophane homogénéisée,
après quoi on procède à la dilution du mélange de la résine et du plastifiant avec de l'eau jusqu'à obtenir une dispersion aqueuse dont la viscosité Brookfield, à 20°C et à 20 RPM, est au plus égale à 150 mPa.s.

8. Procédé selon l'une des revendications 6 ou 7,
**caractérisé en ce que** l'on incorpore des fibres naturelles ou artificielles audit produit liquide d'amélioration d'adhérence.

9. Procédé selon l'une des revendications 6 à 8,
**caractérisé en ce que** l'on incorpore des pigments minéraux ou organiques audit produit liquide d'amélioration d'adhérence.

10. Procédé selon l'une des revendications 6 à 9,
**caractérisé en ce que** l'on incorpore des charges audit produit liquide d'amélioration d'adhérence.

11. Procédé d'utilisation du produit liquide d'amélioration selon l'une quelconque des revendications 1 à 5 pour la réalisation, à partir d'un liant sec, d'un mortier à adhérence améliorée sur un support,
**caractérisé en ce que**, audit liant sec, on ajoute une masse dudit produit d'amélioration d'adhérence comprise en 1/15 et 1/20 de la masse dudit liant sec, ainsi qu'une masse d'eau environ double de celle dudit produit d'amélioration d'adhérence.
